# FASCICULE DE BREVET EUROPEEN

(11) **EP 1 790 780 B1**
(45) Date de publication et mention de la délivrance du brevet: **05.10.2011**
(21) Numéro de dépôt: 06024441.5
(22) Date de dépôt: 24.11.2006
(51) Int. Cl.: E02F 3/407, A01K 5/00, A01F 25/20

(54) **Godet de chargement et de déchargement**
Baggerlöffel zum Be- und Entladen
Bucket for loading and unloading

(30) Priorité: 24.11.2005 FR 0511905
(43) Date de publication de la demande: 30.05.2007
(73) Titulaire: Emily S.A.S., 29800 Treflevenez (FR)
(72) Inventeur: Alegoet, Bernard, 29800 Landerneau (FR); Miossec, Arnaud, 29440 Plouzevede (FR); Nedelec, Pierre, 29460 Hanvec (FR)
(74) Mandataire: Maillet, Alain

(56) Documents cités:
- FR-A- 2 767 634
- FR-A- 2 804 417
- FR-A- 2 848 540

## Description

La présente invention concerne un godet de chargement et de déchargement destiné à être attelé à un engin automoteur, tel qu'un tracteur agricole, un chargeur télescopique.

Un tel godet permet de charger à un endroit un produit en vrac, par exemple un ensilage d'herbes ou de maïs, pour le transporter et le distribuer à un autre endroit.

De façon connue, un godet de chargement et de déchargement comprend une enveloppe constituée de deux parois principales formant un V, réunies, d'une part, par un fond arrondi et, d'autre part, par deux parois latérales. Au moins une paroi latérale est pourvue d'une ouverture. Une trappe de vidange susceptible d'être manoeuvrée par un vérin permet de dégager ou d'obturer l'ouverture afin de permettre la distribution du produit contenu dans le godet. Pour cela, une vis sans fin est disposée longitudinalement contre le fond pour sortir le produit au travers de l'ouverture.

Certains produits, et en particulier l'herbe récoltée avec une remorque autochargeuse, qui incorpore de longues fibres, et de manière générale de l'herbe ensilée, présentent des difficultés pour sortir au travers de l'ouverture pendant le fonctionnement de la vis sans fin. Rappelons qu'une remorque autochargeuse comporte un rotor pourvu de couteaux dont le nombre peut être réduit pour que l'herbe ne soit pas trop hachée afin de favoriser le travail de rumination des animaux nourris avec un tel ensilage. Une solution à ce problème d'extraction consiste à agrandir l'ouverture réalisée au travers de la paroi latérale. Une telle solution est présentée dans le brevet FR-A-2 804 417, dans laquelle l'orifice de sortie du produit pratiqué dans un des flancs latéraux du godet présente une surface relativement grande et cet orifice de sortie est susceptible d'être refermé par une porte à deux battants. Poussée à l'extrême, cette solution conduirait à réduire la rigidité structurelle du godet. Par ailleurs, lorsqu'un accessoire tel qu'une griffe de chargement est monté sur le godet, la nécessité d'obtenir une structure rigide du godet est accrue. En effet, une telle griffe de chargement est montée de manière articulée sur la paroi dorsale et elle est mue par une paire de vérins hydrauliques prenant ancrage également sur la paroi dorsale. Cette griffe engendre, pendant sa fermeture, des efforts relativement importants sur la paroi frontale et qui tendent ainsi à écarter les deux parois dorsale et frontale.

Le but de l'invention consiste donc à proposer un godet de chargement et de déchargement pourvu dans son fond d'une vis sans fin susceptible de décharger avec une grande facilité le contenu du godet par l'un ou l'autre de ses flancs et qui demeure cependant suffisamment rigide.

Les caractéristiques de l'invention mentionnées ci-dessous, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective avant d'un godet de chargement et de déchargement dont le bras articulé dont il est pourvu est placé dans une position de dégagement de son flanc selon l'invention,
la Fig. 2 représente une vue en perspective arrière d'un godet de chargement et de déchargement selon l'invention,
la Fig. 3 représente une vue en perspective avant d'un godet de chargement et de déchargement dont le bras articulé est placé dans une position de fermeture de son flanc selon l'invention,
la Fig. 4 représente une vue latérale d'un godet de chargement et de déchargement dépourvu de son accessoire de type griffe de chargement et dont le bras articulé est placé dans une position de fermeture selon l'invention, et
la Fig. 5 représente une vue latérale d'un godet de chargement et de déchargement dépourvu de son accessoire de type griffe de chargement et dont le bras articulé est placé dans une position de dégagement selon l'invention.

A cet effet, est proposé un godet de chargement et de déchargement destiné à être attelé à un engin automoteur, comprenant une paroi frontale, une paroi dorsale réunies par une paroi de fond, une vis sans fin disposée longitudinalement contre la paroi de fond pour déverser le contenu du godet au travers de ses flancs, le godet étant remarquable en ce qu'au moins un flanc est dépourvu de paroi de fermeture, et en ce qu'il est pourvu d'au moins un bras articulé mobile entre une position de fermeture du flanc dépourvu de paroi de fermeture et où il réunit les parois frontale et dorsale au niveau de leurs parties distales et une position de dégagement dudit flanc.

On obtient ainsi un godet dont l'un de ses flancs ou ses deux flancs peuvent être entièrement ouverts pour permettre la distribution de produits, même ceux réputés les plus difficiles comme ceux qui incorporent des fibres longues, mais qui demeure également suffisamment rigide lorsque ses flancs sont fermés par le bras articulé, par exemple pendant le transport.

Selon une caractéristique additionnelle de l'invention, le bras articulé comprend un premier élément fixé de manière articulée sur un flasque fixé latéralement à la paroi dorsale et en déport arrière de celle-ci de manière à dégager le flanc du godet et qui est pourvu d'une seconde articulation apte à coulisser dans une glissière en forme d'arc de cercle disposée latéralement à la paroi frontale.

Selon une caractéristique additionnelle de l'invention, le bras articulé comprend un second élément relié au premier élément par la seconde articulation et relié au flasque, par l'intermédiaire d'une bielle.

Il en résulte un mouvement combiné du premier élément et du second élément constitutifs du bras articulé.

Selon une caractéristique additionnelle de l'invention, le second élément est pourvu d'une troisième articulation, le flasque étant pourvu d'une quatrième articulation et sur lesquelles s'articulent la bielle, lesdites articulations étant disposées de telle sorte que le second élément puisse se rapprocher du premier élément lorsque le bras articulé se déplace en direction de sa position de dégagement.

Selon une caractéristique additionnelle de l'invention, le flasque comprend deux plaques entre lesquelles est monté le premier élément du bras articulé.

Selon une caractéristique additionnelle de l'invention, le premier élément du bras articulé comprend deux plaques entre lesquelles peut prendre place le second élément.

Selon une caractéristique additionnelle de l'invention, le bras articulé est entraîné par un moyen de manoeuvre.

Selon une caractéristique additionnelle de l'invention, le moyen de manoeuvre est constitué d'un vérin hydraulique fixé sur le flasque par l'intermédiaire d'une cinquième articulation et fixé sur le premier élément du bras articulé par l'intermédiaire d'une sixième articulation.

Selon une caractéristique additionnelle de l'invention, le godet est pourvu d'une griffe de chargement comprenant une lame qui peut être déplacée au-dessus de l'ouverture formée entre la paroi dorsale et la paroi frontale, sous l'effet d'un moyen de manoeuvre.

Selon une caractéristique additionnelle de l'invention, la lame est fixée entre une paire de leviers montés par l'intermédiaire d'articulations sur des étriers fixés latéralement à la paroi dorsale et à la paroi frontale, en déport arrière de cellcs-ci.

Les caractéristiques de l'invention mentionnées ci-dessus, ainsi que d'autres, apparaîtront plus, clairement à la lecture de la description suivante d'un exemple de réalisation, ladite description étant faite en relation avec les dessins joints, parmi lesquels:

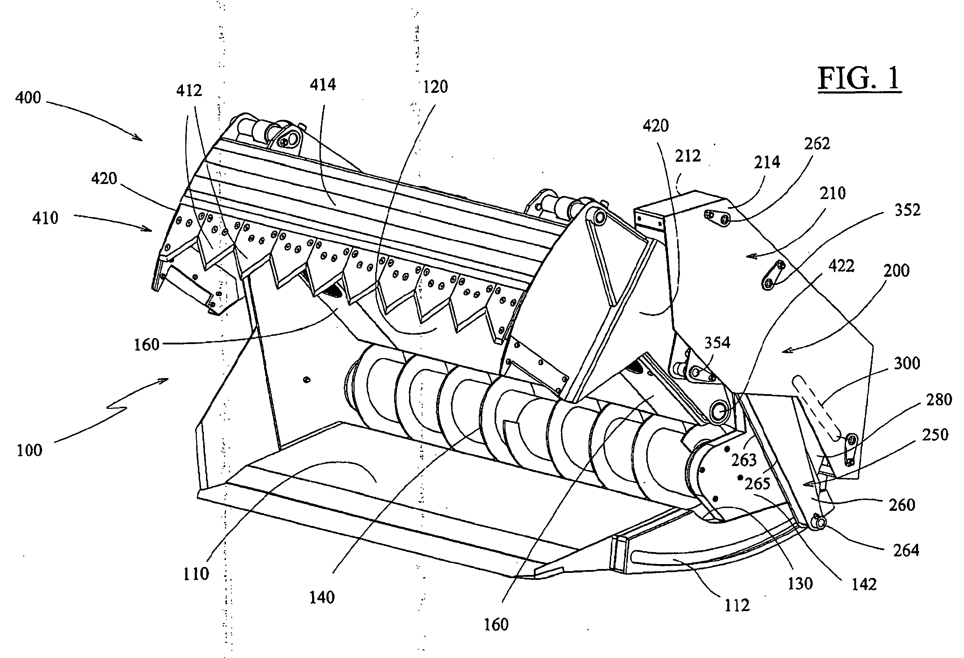

Le godet 100 de chargement et de déchargement représenté aux Figs. 1 à 5 est destiné à être attelé à un engin automoteur, tel qu'un tracteur agricole, un chargeur télescopique, pour charger, transporter et distribuer un produit en vrac tel qu'un ensilage d'herbe ou de maïs.

Il comprend à la Fig. 1, une enveloppe constituée d'une paroi frontale 110, d'une paroi dorsale 120 réunies par une paroi de fond 130, une vis sans fin 140 disposée longitudinalement contre la paroi de fond 130 en étant tenue à ses extrémités par l'intermédiaire de deux joues 142 fixées sur la paroi dorsale 120. Une seule joue 142 est visible sur cette vue en perspective.

La vis sans fin 140 est de préférence du type constitué de deux demis-vis coaxiales et jointives fonctionnant de manière autonome. Un godet pourvu d'une telle vis sans fin est décrit dans la demande de brevet français déposée sous le n° 05 02740.

Le godet 100 peut être pourvu, comme cela apparaît aux Figs. 1, 2 et 3, d'un accessoire 400 tel qu'une griffe de chargement destinée à découper du produit stocké en silo pour remplir le godet 100, sans requérir de manutention de la part du conducteur de l'engin ou d'une autre personne.

La griffe de chargement 400 comprend ainsi à la Fig. 1, une lame 410 qui peut être déplacée au-dessus de l'ouverture formée par les parois dorsale 120 et frontale 110. La lame 410 est fixée entre une paire de leviers 420 montés par l'intermédiaire d'articulations 422 sur des étriers 160 fixés latéralement aux parois dorsale 120 et frontale 110. A cette Fig. 1, seule une articulation 422 est visible. La lame 410 est constituée d'une pluralité de dents 412 assemblées sur une plaque support 414 solidarisée aux leviers 420.

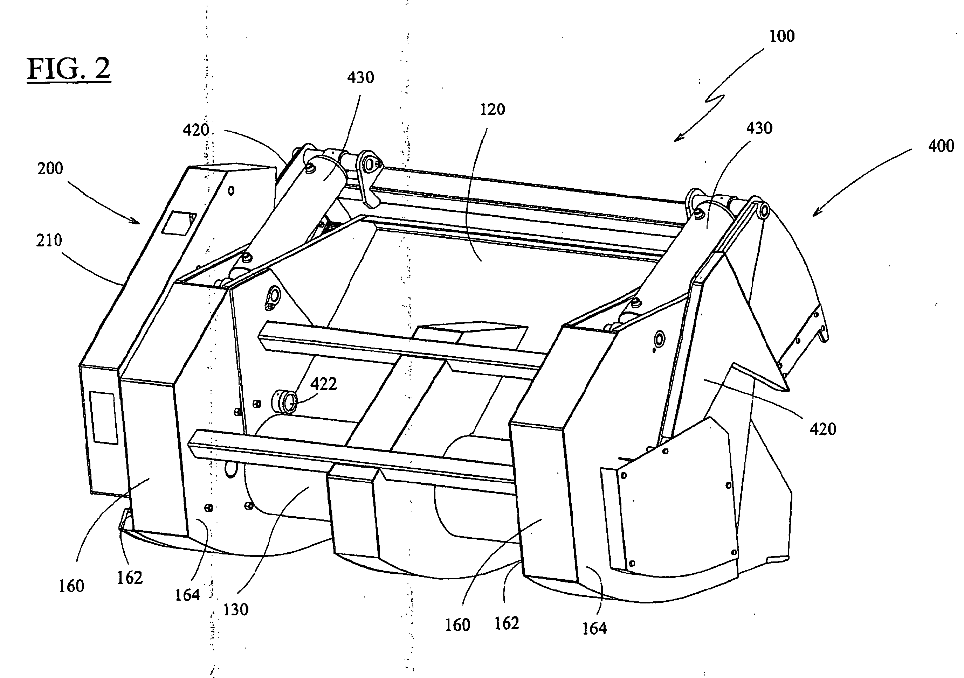

A la Fig. 2, un moyen de manoeuvre 430, tel que qu'une paire de vérins hydrauliques, est monté de manière articulée entre les étriers 160 et les leviers 420 pour mouvoir la griffe de chargement 400 afin qu'elle puisse trancher un volume de produit ensilé pour qu'il puisse remplir le godet. On remarquera que chaque étrier 160 comprend, à cette Fig. 2, une paire de plaques 162 et 164 entre lesquelles est fixé un vérin 430.

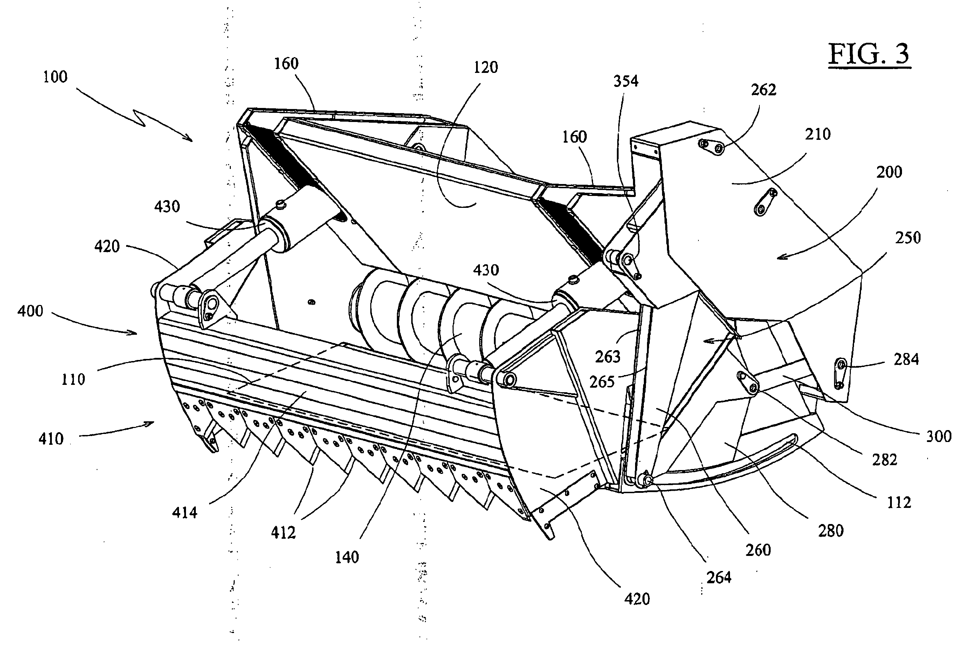

La lame 410 est ainsi rendue mobile, entre une position de dégagement où elle est positionnée dans le prolongement de la paroi dorsale 120 du godet 100 comme cela est montré à la Fig. 1 et une position de découpe où elle est positionnée dans le prolongement de la paroi frontale 110 comme cela apparaît à la Fig. 3.

Le godet 100 comprend encore aux Figs. 1 à 5 au moins un dispositif de fermeture 200 de l'un ou l'autre de ses flancs. Le flanc qui est susceptible d'être fermé par le dispositif de fermeture 200 est dépourvu de paroi de fermeture pour faciliter la distribution du produit pendant le fonctionnement de la vis sans fin en évitant les bourrages. Un seul dispositif de fermeture 200 est monté sur le godet représenté aux Figs. 1, 2 et 3.

Aux Figs. 1, 3, 4 et 5, le dispositif de fermeture 200 comporte un bras articulé 250 destiné à permettre la fermeture ou l'ouverture du flanc du godet 100 et à relier mécaniquement les parois frontale 110 et dorsale 120.

Le bras articulé 250 est, à cet effet, monté dans un flasque 210 qui est fixé de manière accolée à un des étriers 160. Le flasque 210 est, comme cet étrier 160, fixé en déport arrière de façon à ce qu'il puisse dégager complètement le flanc du godet 100, c'est-à-dire son côté latéral.

Le bras articulé 250 comprend un premier élément 260 fixé de manière articulée sur le flasque 210 ainsi qu'un second élément 280 fixé de manière articulée, d'une part, sur le premier élément 260 et, d'autre part, sur ledit flasque 210, par l'intermédiaire d'une bielle 300.

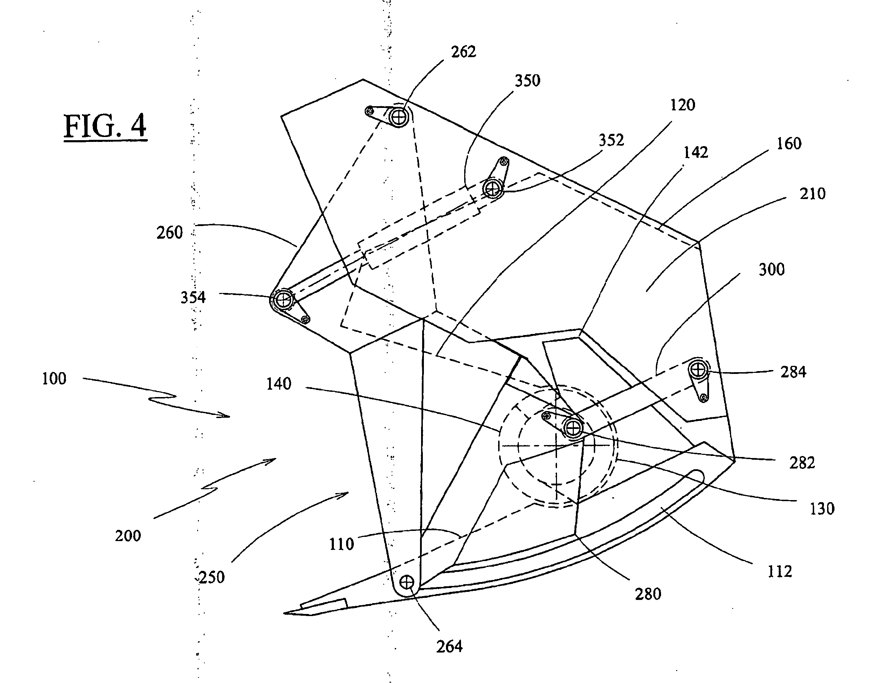

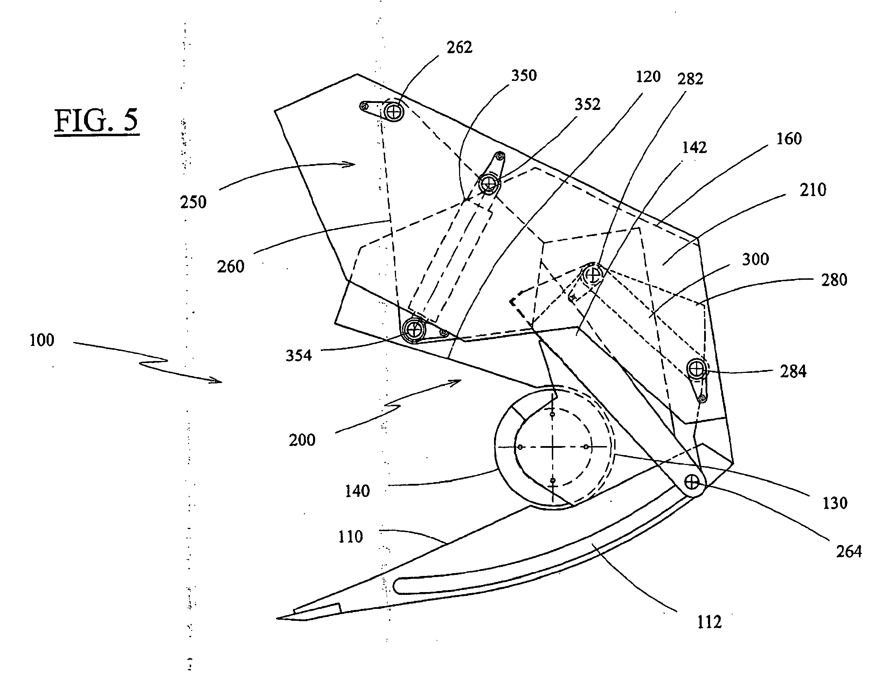

Aux Figs. 4 et 5, le premier élément 260 du bras articulé 250 est fixé, par une extrémité, sur le flasque 210 au niveau de sa partie avant haute, par l'intermédiaire d'une première articulation 262, alors que son autre extrémité est pourvue d'une seconde articulation 264 apte à coulisser dans une glissière 112 en forme d'arc de cercle disposée latéralement à la paroi frontale 110, dans la partie basse dudit étrier 160.

Le premier élément 260 peut de la sorte se déplacer, entre une première position dite de fermeture du flanc visible aux Figs. 3 et 4 où il relie mécaniquement la paroi frontale 110 et la paroi dorsale 120, procurant ainsi une grande rigidité au godet 100, et une position dite de dégagement du flanc, visible aux Figs. 1 et 5.

Dans la position de fermeture du bras articulé 250, le premier élément 260, en coopération avec le second élément 280, obture le flanc du godet 100.

Dans la position de dégagement du bras articulé 250, le flanc du godet est complètement ouvert, favorisant ainsi le déchargement du godet 100 par la vis sans fin 140. Les produits réputés les plus difficiles à déverser peuvent donc être facilement distribués par le godet 100.

Aux Figs. 4 et 5, le second élément 280 est attelé d'un bord sur la seconde articulation 264 et de l'autre sur une troisième articulation 282 sur laquelle peut tourillonner une extrémité de la bielle 300 alors que son autre extrémité peut tourillonner dans une quatrième articulation 284 fixée sur le flasque 210 au niveau de sa partie arrière basse. La disposition des troisième 282 et quatrième articulations 284 est telle que le second élément 280 se rapproche du premier élément 260 lorsque le bras articulé 250 se déplace en direction de sa position de dégagement.

On remarquera que le premier élément 260 et le second élément 280 possèdent des géométries complémentaires afin que le bras articulé 250 puisse former une paroi de fermeture du flanc lorsqu'il est positionné dans sa position de fermeture, afin d'obturer complètement le flanc du godet 100.

A la Fig. 1, le premier élément 260 comporte une paire de plaques 263, 265 semblables entre lesquelles peut prendre place le second élément 280 lorsque le bras articulé 250 se déplace vers sa position de dégagement. Dans cette position, le second élément 280 est alors rentré partiellement dans le premier élément 260 comme cela apparaît aux Figs. 1 et 5.

A la Fig. 1, le flasque 210 comporte également une paire de plaques 212, 214 entre lesquelles peut osciller entre ses deux positions respectives le premier élément 260 du bras articulé 250. De la sorte, le bras articulé 250 peut dégager, dans sa position de dégagement, la totalité de la surface du flanc du godet 100.

Aux Figs. 4 et 5, un moyen de manoeuvre, tel qu'un vérin hydraulique 350, permet de manoeuvrer, suivant un mouvement combiné, le premier élément 260 et le second élément 280 du bras articulé 250 entre ses deux positions remarquables. Le vérin hydraulique 350 est fixé respectivement sur le flasque 210 par l'intermédiaire d'une cinquième articulation 352 et sur le premier élément 260 du bras articulé 250 par l'intermédiaire d'une sixième articulation 354.

Le godet de chargement et de déchargement de l'invention permet, grâce à l'ouverture totale de son flanc ou de chacun de ses flancs, de faciliter la distribution du produit qu'il contient.

Dans la position de fermeture de son bras articulé, le premier élément de celui-ci relie mécaniquement les parois frontale et dorsale du godet pour lui procurer une grande rigidité pendant son utilisation, et en particulier lorsqu'il est utilisé avec une griffe de chargement.

## Revendications

1. Godet (100) de chargement et de déchargement destiné à être attelé à un engin automoteur, comprenant une paroi frontale (110), une paroi dorsale (120) réunies par une paroi de fond (130), une vis sans fin (140) disposée longitudinalement contre la paroi de fond (130) pour déverser le contenu du godet (100) au travers de ses flancs, **caractérisé en ce qu'**au moins un flanc est dépourvu de paroi de fermeture, et **en ce qu'**il est pourvu d'au moins un bras articulé (250) mobile entre une position de fermeture du flanc dépourvu de paroi de fermeture et où il réunit mécaniquement les parois frontale (110) et dorsale (120) au niveau de leurs parties distales et une position de dégagement dudit flanc.

2. Godet (100) selon la revendication 1, **caractérisé en ce que** le bras articulé (250) comprend un premier élément (260) fixé de manière articulée sur un flasque (210) fixé latéralement à la paroi dorsale (120) et en déport arrière de celle-ci de manière à dégager le flanc du godet (100) et qui est pourvu d'une seconde articulation (264) apte à coulisser dans une glissière (112) en forme d'arc de cercle disposée latéralement à la paroi frontale (110).

3. Godet (100) selon la revendication 2, **caractérisé en ce que** le bras articulé (250) comprend un second élément (280) relié au premier élément (260) par la seconde articulation (264) et relié au flasque (210), par l'intermédiaire d'une bielle (300).

4. Godet (100) selon la revendication 3, **caractérisé en ce que** le second élément (280) est pourvu d'une troisième articulation (282), le flasque (210) étant pourvu d'une quatrième articulation (284) et sur lesquelles s'articulent la bielle (300), lesdites articulations (282, 284) étant disposées de telle sorte que le second élément (280) puisse se rapprocher du premier élément (260) lorsque le bras articulé (250) se déplace en direction de sa position de dégagement.

5. Godet (100) selon la revendication 2 à 4, **caractérisé en ce que** le flasque (210) comprend deux plaques (212, 214) entre lesquelles est monté le premier élément (260).

6. Godet (100) selon la revendication 3 à 5, **caractérisé en ce que** le premier élément (260) comprend deux plaques (263, 265) entre lesquelles peut prendre place le second élément (280).

7. Godet (100) selon l'une quelconque des revendications précédentes, **caractérisé en ce que** le bras articulé (250) est entraîné par un moyen de manoeuvre (350).

8. Godet (100) selon la revendication 7, **caractérisé en ce que** le moyen de manoeuvre (350) est constitué d'un vérin hydraulique fixé sur le flasque (210) par l'intermédiaire d'une cinquième articulation (352) et fixé sur le premier élément (260) du bras articulé (250) par l'intermédiaire d'une sixième articulation (354).

9. Godet (100) selon l'une quelconque des revendications précédentes, **caractérisé en ce qu'**il est pourvu d'une griffe de chargement (400) comprenant une lame (410) qui peut être déplacée au-dessus de l'ouverture formée entre la paroi dorsale (120) et la paroi frontale (110), sous l'effet d'un moyen de manoeuvre (430).

10. Godet (100) selon la revendication 9, **caractérisé en ce que** la lame (410) est fixée entre une paire de leviers (420) montés par l'intermédiaire d'articulations (422) sur des étriers (160) fixés latéralement à la paroi dorsale (120) et à la paroi frontale (110), en déport arrière de celles-ci.

## Claims

1. Loading and unloading bucket (100) which is to be coupled to a self-propelled machine, comprising a front wall (110) and a back wall (120) joined by a base wall (130), and an endless screw (140) arranged longitudinally against the base wall (130) in order to discharge the contents of the bucket (100) through the flanks thereof, **characterised in that** at least one flank is without a closing wall, and **in that** it is provided with at least one articulated arm (250) which is mobile between a position closing the flank without a closing wall, where it joins the front wall (110) and the back wall (120) mechanically at their distal portions, and a position freeing the said flank.

2. Bucket (100) according to claim 1, **characterised in that** the articulated arm (250) comprises a first element (260) which is secured in an articulated manner to a cover (210) secured to the back wall (120) laterally and in a manner offset rearwardly therefrom in order to free the flank of the bucket (100), and which first element is provided with a second articulation (264) suitable for running in a slide (112) which is in the shape of an arc of a circle and which is arranged laterally with respect to the front wall (110).

3. Bucket (100) according to claim 2, **characterised in that** the articulated arm (250) comprises a second element (280) connected to the first element (260) by the second articulation (264) and connected to the cover (210) by way of a connecting rod (300).

4. Bucket (100) according to claim 3, **characterised in that** the second element (280) is provided with a third articulation (282), the cover (210) being provided with a fourth articulation (284), on which articulations the connecting rod (300) is articulated, the said articulations (282, 284) being arranged in such a manner that the second element (280) can approach the first element (260) when the articulated arm (250) moves in the direction towards its freeing position.

5. Bucket (100) according to claims 2 to 4, **characterised in that** the cover (210) comprises two plates (212, 214) between which the first element (260) is mounted.

6. Bucket (100) according to claims 3 to 5, **characterised in that** the first element (260) comprises two plates (263, 265) between which the second element (280) can be placed.

7. Bucket (100) according to any one of the preceding claims, **characterised in that** the articulated arm (250) is driven by an operating means (350).

8. Bucket (100) according to claim 7, **characterised in that** the operating means (350) is formed by an hydraulic jack secured to the cover (210) by way of a fifth articulation (352) and secured to the first element (260) of the articulated arm (250) by way of a sixth articulation (354).

9. Bucket (100) according to any one of the preceding claims, **characterised in that** it is provided with a loading claw (400) comprising a blade (410) which can be displaced above the opening formed between the back wall (120) and the front wall (110), under the effect of an operating means (430).

10. Bucket (100) according to claim 9, **characterised in that** the blade (410) is secured between a pair of levers (420) mounted by way of articulations (422) on clamps (160) secured laterally to the back wall (120) and to the front wall (110), offset rearwardly therefrom.

## Patentansprüche

1. Baggerlöffel (100) zum Be- und Entladen, dazu bestimmt, an eine motorgetriebene Baumaschine angekuppelt zu werden, enthaltend eine Vorderwand (110) und eine Rückwand (120), die durch eine Bodenwand (130) miteinander verbunden sind, eine Förderschnecke (140), die längs gegen die Bodenwand (130) angeordnet ist, um den Inhalt des Baggerlöffels (100) durch seine Seiten zu entleeren, **dadurch gekennzeichnet, dass** wenigstens eine Seite keine Verschlußwand aufweist, und dadurch, dass sie mit wenigstens einem Gelenkarm (250) versehen ist, der zwischen einer Schließposition der Seite ohne Verschlußwand und wo er die Vorderwand (110) und die Rückwand (120) in der Ebene ihrer distalen Abschnitte mechanisch miteinander verbindet, und einer Freigabeposition der Seite beweglich ist.

2. Baggerlöffel (100) nach Anspruch 1, **dadurch gekennzeichnet, dass** der Gelenkarm (250) ein erstes Element (260) umfasst, das gelenkig an einem Flansch (210) befestigt ist, der seitlich an der Rückwand (120) und versetzt hinter dieser so angebracht ist, dass die Seite des Baggerlöffels (100) freigegeben wird, und der mit einem zweiten Gelenk (264) ausgestattet ist, das fähig ist, in einer kreisbogenförmigen Gleitschiene (112) zu gleiten, die seitlich an der Vorderwand (110) angeordnet ist.

3. Baggerlöffel (100) nach Anspruch 2, **dadurch gekennzeichnet, dass** der Gelenkarm (250) ein zweites Element (280) umfasst, das mit dem ersten Element (260) über das zweite Gelenk (264) verbunden ist und mit dem Flansch (210) über ein Zwischenglied (300) verbunden ist.

4. Baggerlöffel (100) nach Anspruch 3, **dadurch gekennzeichnet, dass** das zweite Element (280) mit einem dritten Gelenk (282) ausgestattet ist, wobei der Flansch (210) mit einem vierten Gelenk (284) ausgestattet ist und das Zwischenglied (300) auf ihnen angelenkt ist, wobei die Gelenke (282, 284) so angeordnet sind, dass sich das zweite Element (280) an das erste Element (260) annähern kann, wenn sich der Gelenkarm (250) in Richtung seiner Freigabeposition bewegt.

5. Baggerlöffel (100) nach Anspruch 2 bis 4, **dadurch gekennzeichnet, dass** der Flansch (210) zwei Platten (212, 214) umfasst, zwischen denen das erste Element (260) montiert ist.

6. Baggerlöffel (100) nach Anspruch 3 bis 5, **dadurch gekennzeichnet, dass** das erste Element (260) zwei Platten (263, 265) umfasst, zwischen denen das zweite Element (280) einen Platz einnehmen kann.

7. Baggerlöffel (100) nach einem der vorhergehenden Ansprüche, **dadurch gekennzeichnet, dass** der Gelenkarm (250) von einem Betätigungsmittel (350) angetrieben wird.

8. Baggerlöffel (100) nach Anspruch 7, **dadurch gekennzeichnet, dass** das Betätigungsmittel (350) aus einem Hydraulikzylinder gebildet ist, der über ein fünftes Gelenk (352) auf dem Flansch (210) befestigt ist und auf dem ersten Element (260) des Gelenkarms (250) über ein sechstes Gelenk (354) befestigt ist.

9. Baggerlöffel (100) nach einem der vorhergehenden Ansprüche, **dadurch gekennzeichnet, dass** er mit einer Ladekralle (400) ausgestattet ist, die eine Schneide (410) umfasst, die unter der Einwirkung eines Betätigungsmittels (430) über die Öffnung bewegt werden kann, die zwischen der Rückwand (120) und der Vorderwand (110) gebildet ist.

10. Baggerlöffel (100) nach Anspruch 9, **dadurch gekennzeichnet, dass** die Schneide (410) zwischen einem Paar von Hebeln (420) befestigt ist, die mittels Gelenken (422) an Bügelelementen (160) montiert sind, die an der Rückwand (120) und der Vorderwand (110) seitlich und zu diesen nach hinten versetzt befestigt sind.
